# EUROPÄISCHE PATENTSCHRIFT

(11) **EP 2 676 050 B1**
(45) Veröffentlichungstag und Bekanntmachung des Hinweises auf die Patenterteilung: **13.07.2016**
(21) Anmeldenummer: 12700603.9
(22) Anmeldetag: 14.01.2012
(51) Int. Cl.: F16H 59/10, F16H 63/42, B60K 20/06

(54) **FAHRZEUG MIT EINER WÄHLEINRICHTUNG ZUM ANWÄHLEN VERSCHIEDENER ZUSTÄNDE EINES GETRIEBES**
VEHICLE WITH A SELECTOR DEVICE FOR SELECTING DIFFERENT STATES OF A TRANSMISSION
VEHICULE PRESENTANT UN DISPOSITIF DE SELECTION PERMETTANT DE SELECTIONNER DIFFERENTS ETATS D'UNE BOÎTE DE VITESSES

(30) Priorität: 18.02.2011 DE 102011004389
(43) Veröffentlichungstag der Anmeldung: 25.12.2013
(73) Patentinhaber: Bayerische Motoren Werke Aktiengesellschaft, 80809 München (DE)
(72) Erfinder: LINDNER, Matthias, 82166 Gräfeling (DE); TILLE, Thomas, 81249 Muenchen (DE)
(86) Internationale Anmeldenummer: PCT/EP2012/000148
(87) Internationale Veröffentlichungsnummer: WO 2012/110177

(56) Entgegenhaltungen:
- EP-A2- 0 432 507
- EP-A2- 1 255 064
- DE-A1-102007 036 086
- DE-U1-202004 019 677
- GB-A- 2 399 606
- JP-A- 2008 037 297
- JP-A- 2008 044 540
- US-A1- 2004 110 600
- US-A1- 2010 056 331
- US-A1- 2011 036 194

## Beschreibung

Die vorliegende Erfindung betrifft ein Fahrzeug gemäß dem Oberbegriff des Patentanspruches 1.

Ein derartiges Fahrzeug ist aus der US 2011/036194 A1 bekannt. Zum technischen Hintergrund der Erfindung zählen die DE 10 2007 036 086 A1, GB 2399606 A, US 2004 110600 A1, JP 2008 037297 A, EP 432 507 A2, EP 1 255 064 A2, JP 2008 044 540 A, US 2 010 056331 A1 sowie die DE 20 2004 019 677 U1.

Bei Fahrzeugen der BMW 7er Baureihe, die ab dem Jahr 2002 verkauft wurden, war ein lenkstockartiger Wählhebel zum Anwählen der einzelnen Betriebszustände Fahren (D), Neutral (N) und Rückwärtsfahren (R) vorgesehen. Bei diesen Fahrzeugen ist der Wählhebel auf einer dem Fahrer abgewandten Seite des Lenkrads und beabstandet von dem Lenkrad angeordnet. Der Wählhebel ist als monostabiler Wählhebel konzipiert, d. h. nach einer Betätigung kehrt er automatisch in seine Ausgangsstellung zurück. Um von dem momentanen Betriebszustand (P, R, N, D) in einen anderen Betriebszustand umzuschalten, muss der Wählhebel aus seiner unbetätigten Stellung um eine Schwenkachse, die parallel bzw. koaxial zur Lenkachse des Lenkrads ist, verschwenkt werden.

Aufgabe der Erfindung ist es, ein Fahrzeug mit einer Wähleinrichtung zum Anwählen verschiedener Betriebszustände eines Getriebes zu schaffen, bei dem die Wähleinrichtung komfortabel und noch intuitiver zu bedienen ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Fahrzeug mit einem Lenkrad, das um eine Lenkachse drehbar ist, einem Getriebe und einer von Hand zu betätigenden Wähleinrichtung, die zum Anwählen verschiedener Zustände des Getriebes vorgesehenen ist. Die Wähleinrichtung ist auf einer dem Fahrer abgewandten Seite des Lenkrads und beabstandet von dem Lenkrad angeordnet. Sie weist ein Wählelement auf, das drehbar oder schwenkbar um eine Dreh- oder Schwenkachse angeordnet ist.

Der Kern der Erfindung besteht darin, dass die Dreh- oder Schwenkachse im Wesentlichen quer zur Lenkachse ist. Der "Bewegungsfreiheitsgrad" des Wählelements gemäß der Erfindung ist somit quer zu dem bei der eingangs erwähnten BMW 7er Baureihe anzutreffenden Wählhebel.

Der Begriff "Zustände des Getriebes" umfasst insbesondere die üblichen Betriebszustände eines Automatikgetriebes, nämlich "Fahren" (D), "Neutral" (N) und "Rückwärtsfahren" (R). Sofern das Fahrzeuggetriebe "initiiert vom Fahrer" von einem Getriebegang in einen anderen Getriebegang geschaltet werden kann, umfasst der Begriff "Zustände des Getriebes" auch das "manuelle" Einlegen einzelner Gänge, insbesondere manuelle Schrittschaltungen von einem Getriebegang in einen nächsthöheren oder einen nächstniedrigeren Getriebegang.

Die Erfindung ist insbesondere für so genannte "Shift-by-wire" Schaltsysteme geeignet, d. h. für Schalteinrichtungen, bei denen die Wähleinrichtung bzw. das Wählelement elektrisch mit einem Getriebesteuergerät bzw. mit einem Getriebe gekoppelt ist.

Nach einer Weiterbildung der Erfindung ist das Wählelement in eine erste Richtung und eine der ersten Richtung entgegengesetzte zweite Richtung dreh- oder schwenkbar angeordnet und zwar um die oben erwähnte Drehoder Schwenkachse. Das Wählelement ist auf einer - in Fahrtrichtung des Fahrzeugs gesehen - rechten Seite der Lenkachse angeordnet, d. h. in einem Winkelbereich, in dem bei herkömmlichen Fahrzeugen üblicherweise der "Scheibenwischerhebel" angeordnet ist. Die Wähleinrichtung bzw. das Wählelement kann wahlweise unterhalb oder oberhalb einer das Lenkrad gedanklich halbierenden horizontalen Ebene angeordnet sein. Vorzugsweise ist die Wähleinrichtung bzw. das Wählelement bei einer Draufsicht auf das Lenkrad aus der Sicht des Fahrers im oberen rechten Lenkradquadranten angeordnet.

Um eine optimale Zugänglichkeit des Wählelements beim Fahren sicher zu stellen, kann vorgesehen sein, dass das Wählelement, in Radialrichtung des Lenkrads betrachtet, etwas über einen Lenkradkranz des Lenkrads hinaussteht.

Nach der Erfindung ist vorgesehen, dass das Wählelement drehbar oder schwenkbar an einem "Wählelementhalter" angeordnet ist, welcher im Wesentlichen radial von einer die Lenkachse umgebenden Lenksäulenverkleidung nach außen steht. Der Wählelementhalter kann fahrzeugfest angeordnet sein. Das bedeutet, dass er im Unterschied zu einem Scheibenwischer- oder Blinkerhebel nicht relativ zur Lenksäulenverkleidung bewegbar ist.

Erfindungsgemäß weist das Wählelement einen "verdickten Abschnitt" und einen radial in Bezug auf die Dreh- oder Schwenkachse des Wählelements abstehenden, Bedienflächen aufweisenden Bedienabschnitt auf. Der Bedienabschnitt ist derjenige Bereich, der vom Fahrer bei der Betätigung der Wähleinrichtung erfasst wird. Der Bedienabschnitt kann beispielsweise eine Vorder- und eine Rückseite aufweisen. Über zugeordnete Bedienflächen der Vorder- oder Rückseite kann der Fahrer das Wählelement nach vorne in Fahrtrichtung drücken oder nach hinten entgegen der Fahrtrichtung ziehen.

Es ist vorgesehen, dass der Bedienabschnitt zum Anwählen des Betriebszustands D in Fahrtrichtung des Fahrzeugs zu Drehen bzw. zu Verschwenken ist und zum Anwählen des Betriebszustands R entgegen der Fahrtrichtung zu drehen bzw. zu verschwenken ist.

Nach einer Weiterbildung der Erfindung ist an dem Wählelementhalter eine zum Anzeigen des aktuell angewählten Betriebszustands vorgesehene Anzeigeeinrichtung vorgesehen. Die Anzeigeeinrichtung kann baulich in den Wählelementhalter oder in den Bedienabschnitt integriert sein. Die Anzeigeeinrichtung kann durch ein Display, Beschriftungen mit zugeordneten Leuchtelementen (z. B. LEDs) o. ä. gebildet sein. Zusätzlich zu den einzelnen Betriebszuständen des Getriebes (R, N, D) kann auch vorgesehen sein, dass angezeigt wird, ob sich das Getriebe gerade im Parkzustand (P) befindet.

Bei der Wähleinrichtung handelt es sich um eine sogenannte monostabile Wähleinrichtung. Unter einer monostabilen Wähleinrichtung wird eine Wähleinrichtung verstanden, die eine Rückstelleinrichtung aufweist, welche die Wähleinrichtung bzw. das betreffende Wählelement nach einer Betätigung stets in eine vorgegebene, unbetätigte Stellung zurückbewegt.

Die Wähleinrichtung ist vorzugsweise so gestaltet und ausgelegt, dass sie per Finger, insbesondere mit nur einem einzelnen Finger betätigbar ist.

Es ist vorgesehen, dass die Wähleinrichtung bzw. deren Wählelement ausgehend von der unbetätigten Stellung entgegen einer Rückstellkraft in eine erste Betätigungsstellung bewegbar ist und ausgehend von der ersten Betätigungsstellung weiter entgegen einer Rückstellkraft in eine zweite Betätigungsstellung bewegbar ist. Ferner ist ein Druckpunkt vorgesehen, der beim Übergang von der ersten Betätigungsstellung zur zweiten Betätigungsstellung zu überwinden ist.

Nach einer Weiterbildung der Erfindung ist eine Sensorik vorgesehen, welche den Dreh- oder Schwenkzustand, insbesondere den Dreh- oder Schwenkwinkel des Wählelements in Bezug auf die unbetätigte Stellung detektiert und dem Getriebesteuergerät ein entsprechendes Signal zuführt. Zur Sensierung des Dreh- oder Schwenkzustandes kann z. B. ein optischer Sensor vorgesehen sein.

Im Folgenden wird die Erfindung im Zusammenhang mit der Zeichnung näher erläutert. Es zeigen:
- Figur 1: das Grundprinzip einer Wähleinrichtung gemäß der Erfindung;
- Figur 2: eine Wähleinrichtung gemäß der Erfindung in schematischer Darstellung in Seitenansicht; und
- Figur 3: das Grundprinzip einer optischen Messsensorik zur Detektierung des Dreh- bzw. Schwenkzustandes eines Wählelements gemäß der Erfindung.

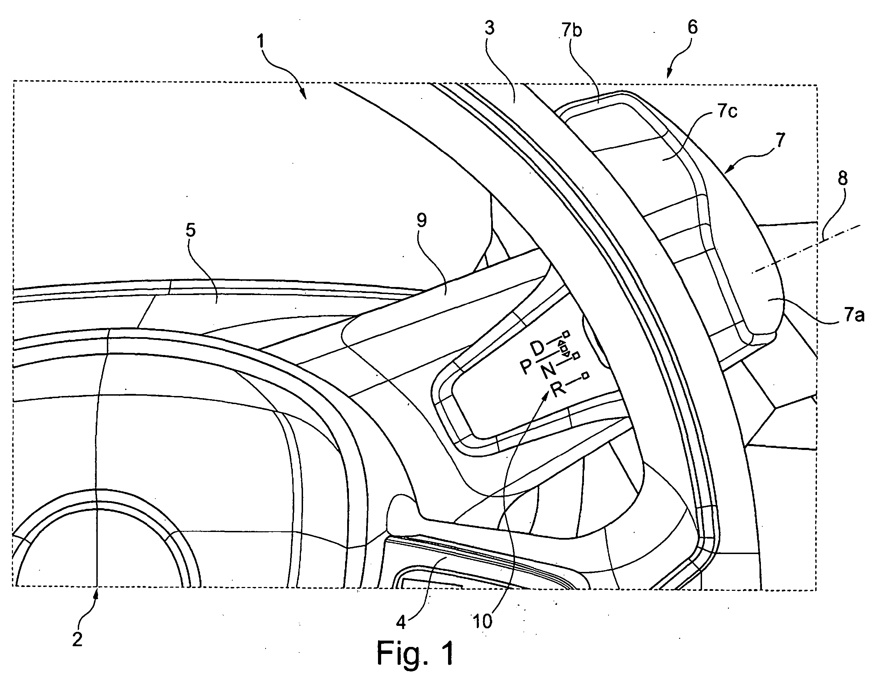

Figur 1 zeigt einen Ausschnitt eines Lenkrads 1 eines Fahrzeugs. Das Lenkrad 1 ist um eine senkrecht oder im Wesentlichen senkrecht zur Zeichenebene verlaufende Drehachse 2 drehbar. Das Lenkrad 1 weist einen Lenkradkranz 3 auf, der über mehrere Lenkradspeichen, von denen hier lediglich 1 die Lenkradspeiche 4 zu sehen ist, mit der Lenkachse 2 verbunden ist. Die Lenkachse 2 ist durch eine Lenksäulenverkleidung 5 verkleidet.

Auf einer dem Fahrer abgewandten Seite des Lenkrads 1 und beabstandet von dem Lenkrad 1 ist eine Wähleinrichtung 6 angeordnet. Die Wähleinrichtung 6 weist ein Wählelement 7 auf, das schwenkbar um eine Dreh- oder Schwenkachse 8 angeordnet ist, die im Wesentlichen quer zu der Lenkachse 2 ist. Das Wählelement 7 ist drehbar bzw. schwenkbar an einem Wählelementhalter 9 angeordnet, der fahrzeugfest angeordnet ist und der im Wesentlichen radial von der Lenksäulenverkleidung 5 nach - vom Fahrer aus gesehen - rechts oben außen absteht, und zwar in der Art eines "Lenkstockhebels". Im Unterschied zu einem Lenkstockhebel ist der Wählelementhalter 9 jedoch, wie bereits erwähnt, nicht bewegbar sondern fahrzeugfest angeordnet.

Das Wählelement 7 weist einen verdickten Abschnitt 7a und einen radial in Bezug auf die Dreh- oder Schwenkachse 8 von dem verdickten Abschnitt 7a, abstehenden Bedienabschnitt 7b auf, dessen dem Fahrer zugewandte Vorderseite 7c und dessen dem Fahrer abgewandte Rückseite (nicht zu erkennen) Bedienflächen bilden, die der Fahrer beim Betätigen des Wählelements berührt.

Wie aus Figur 1 ersichtlich ist, ist in den Wählelementhalter 9 eine Anzeigeeinrichtung 10 integriert, die anzeigt, in welchem Betriebszustand (Fahren, Neutral, Rückwärtsfahren, Parken) das Getriebe sich gerade befindet.

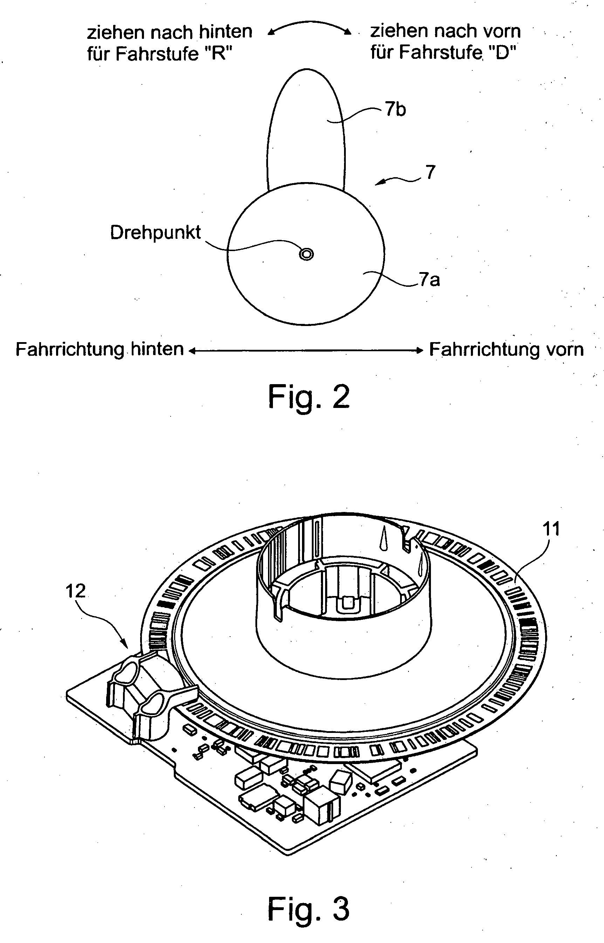

Die in Figur 1 gezeigte Wähleinrichtung ist sehr intuitiv zu bedienen. Zum Einlegen des Betriebszustands Fahren (D) braucht der Fahrer das Wähleleement 7 lediglich nach vorne, d. h: in Fahrtrichtung zu verschwenken (vgl. Figur 2). Zum Einlegen des Betriebszustands Rückwärtsfahren (R) muss der Fahrer das Wählelement 7 lediglich entgegen der Fahrtrichtung nach hinten verschwenken.

Das Wählelement 7 kann als monostabiles Wählelement ausgelegt sein. Monostabil bedeutet, dass das Wählelement 7 nach einer Betätigung selbstständig durch eine Rückstelleinrichtung in eine vorgegebene unbetätigte Stellung zurückbewegt wird.

Erwähnt sei ferner, dass beispielsweise ausgehend von dem Betriebszustand Rückwärtsfahren direkt in den Zustand Fahren (D) geschaltet werden kann. Der Fahrer braucht hierzu das Wählelement 7 lediglich nach vorne in Fahrtrichtung in eine erste Schwenkstellung, in der der Neutralzustand eingelegt werden könnte, und weiter, über einen Druckpunkt hinweg, in eine zweite Schwenkstellung nach vorne zu drücken. Umgekehrt kann auch aus dem Zustand Fahren (D) heraus durch nach hinten Verschwenken des Wählelements 7 über einen Druckpunkt hinaus, unmittelbar in den Betriebszustand (R) geschaltet werden.

Figur 2 verdeutlicht nochmals die bereits erläuterte Bedienlogik;

Figur 3 zeigt das Grundprinzip einer Sensorik, mittels der der Dreh- oder Schwenkzustand des Wählelements 7 (vgl. Figur 1) in Bezug auf den Wählelementhalter (9) detektiert werden kann. Beispielsweise kann mit dem Wählelement 7 ein Lochrad 11 verbunden sein. Eine optische Detektionseinrichtung 12 detektiert den Auslenk- bzw. Dreh- oder Schwenkwinkel des Lochrads 11, woraus der Dreh- oder Schwenkzustand des Wählelements 7 abgeleitet werden kann.

## Patentansprüche

1. Fahrzeug mit
- einem Lenkrad (1), das um eine Lenkachse (2) drehbar ist,
- einem Getriebe,
- einer zum Anwählen verschiedener Betriebszustände des Getriebes vorgesehenen, von Hand betätigbaren Wähleinrichtung (6),
• die auf einer einem Fahrer abgewandten Seite des Lenkrads (1) beabstandet von dem Lenkrad (1) angeordnet ist und
• die ein Wählelemeht (7) aufweist, das drehbar oder schwenkbar um eine Dreh- oder Schwenkachse (8) ist, die im Wesentlichen quer zur Lenkachse (2) ist und
• die zum Anwählen der Betriebszustände Fahren (D), Neutral (N) und Rückwärtsfahren (R) des Getriebes vorgesehen ist,
wobei
• das Wählelement (7) einen verdickten Abschnitt (7a) und einen davon radial in Bezug auf die Dreh- oder Schwenkachse (8) abstehenden, Bedienflächen (7c) aufweisenden Bedienabschnitt (7b) aufweist,
• eine Rückstelleinrichtung vorgesehen ist, welche die Wähleinrichtung (6) nach einer Betätigung stets in eine vorgegebene, unbetätigte Stellung zurückbewegt,
• die Wähleinrichtung ausgehend von der unbetätigten Stellung entgegen einer Rückstellkraft in eine erste Betätigungsstellung bewegbar ist, und
• die Wähleinrichtung (6) ausgehend von der ersten Betätigungsstellung weiter entgegen einer Rückstellkraft in eine zweite Betätigungsstellung bewegbar ist,
• das Wählelement (7) drehbar oder schwenkbar an einem Wählelementhalter (9) angeordnet ist, welcher im Wesentlichen radial von einer die Lenkachse (2) umgebenden Lenksäulenverkleidung (5) nach außen absteht und
• das Wählelement (7) auf einer, in Fahrtrichtung des Fahrzeugs gesehen, rechten Seite der Lenkachse (2) angeordnet ist,
**dadurch gekennzeichnet, dass**
• ein Druckpunkt vorgesehen ist, der beim Übergang von der ersten zur zweiten Betätigungsstellung zu überwinden ist und
• der Bedienabschnitt (7b) zum Anwählen des Betriebszustands Fahren (D) in Fahrtrichtung des Fahrzeugs und zum Anwählen des Betriebszustands Rückwärtsfahren (R) entgegen der Fahrtrichtung zu drehen bzw. zu verschwenken ist.

2. Fahrzeug nach Anspruch 1, **dadurch gekennzeichnet, dass** das Wählelement (7) in eine erste Richtung und in eine der ersten Richtung entgegengesetzte zweite Richtung dreh- oder schwenkbar ist.

3. Fahrzeug nach einem der Ansprüche 1 oder 2, **dadurch gekennzeichnet, dass** das Wählelement (7), in Radialrichtung des Lenkrads betrachtet, etwas über einen Lenkradkranz (3) des Lenkrads (1) hinaussteht.

4. Fahrzeug nach einem der Ansprüche 1 bis 3, **dadurch gekennzeichnet, dass** an dem Wählelementhalter (9) eine zum Anzeigen des aktuell angewählten Betriebszustands (R, N, D) vorgesehene Anzeigeeinrichtung (10) vorgesehen ist.

5. Fahrzeug nach einem der Ansprüche 1 bis 4, **dadurch gekennzeichnet, dass** die Wähleinrichtung (6) so gestaltet und ausgelegt ist, dass sie per Finger, insbesondere mit nur einem Finger, betätigbar ist.

6. Fahrzeug nach einem der Ansprüche 1 bis 5, **dadurch gekennzeichnet, dass** die Wähleinrichtung (6) mit einer Betätigungskraft von weniger als 10N betätigbar ist.

7. Fahrzeug nach einem der Ansprüche 1 bis 6, **dadurch gekennzeichnet, dass** eine Sensorik vorgesehen ist, welche den Dreh- oder Schwenkzustand, insbesondere den Dreh- oder Schwenkwinkel, des Wählelements (7) in Bezug auf dessen unbetätigte Stellung detektiert und einem Getriebesteuergerät ein entsprechendes Signal zuführt.

8. Fahrzeug nach Anspruch 7, **dadurch gekennzeichnet, dass** ein optischer Sensor vorgesehen ist, mittels dem der Dreh- oder Schwenkzustand detektiert wird.

9. Fahrzeug nach einem der Ansprüche 1 bis 8, **dadurch gekennzeichnet, dass** ein Getriebesteuergerät zum Steuern des Getriebes vorgesehenen ist, wobei die Wähleinrichtung (6) elektrisch mit dem Getriebesteuergerät verbunden ist.

## Claims

1. A vehicle having
a steering wheel (1) which is mounted rotatably about a steering axle (2),
- a transmission,
- a manually actuatable selection device (6) which is provided to select different operating modes of the transmission
• and which is arranged on a side of the steering wheel (1), remote from the driver, at a distance from the steering wheel (1), and
• which has a selection element (7) which is rotatable or swivellable about a rotational axis or swivel axis (8) which is substantially transverse to the steering axle (2), and
• which is provided to select the operating modes of Drive (D), Neutral (N) and Reverse (R) of the transmission,
wherein
• the selection element (7) has a thickened portion (7a) and an operating portion (7b) which projects radially therefrom in respect of the rotational axis or swivel axis (8) and has operating surfaces (7c),
• a reset device is provided which, after an actuation, always moves the selection device (6) back into a predetermined, non-actuated position,
• the selection device can be moved from the non-actuated position against a reset force into a first actuation position, and
• the selection device (6) can be moved further from the first actuation position against a reset force into a second actuation position,
• the selection element (7) is arranged rotatably or swivelably on a selection element holder (9) which projects outwards substantially radially from a steering column cover (5) which surrounds the steering axle (2), and
• the selection element (7) is arranged on a right-hand side of the steering axle (2), seen in the direction of travel of the vehicle,
**characterised in that**
• a pressure point is provided which has to be overcome when passing from the first actuation position to the second actuation position, and
• the operating portion (7b) has to be rotated or swivelled in the direction of travel of the vehicle to select the Drive (D) operating mode and has to be rotated or swivelled against the direction of travel to select the Reverse (R) operating mode.

2. A vehicle according to claim 1, **characterised in that** the selection element (7) is rotatable or swivellable in a first direction and in a second direction which is opposite the first direction.

3. A vehicle according to either claim 1 or claim 2, **characterised in that** the selection element (7) projects slightly above a steering wheel rim (3) of the steering wheel (1), viewed in the radial direction of the steering wheel.

4. A vehicle according to any one of claims 1 to 3, **characterised in that** a display device (10) which is provided to display the currently selected operating mode (R, N, D) is provided on the selection element holder (9).

5. A vehicle according to any one of claims 1 to 4, **characterised in that** the selection device (6) is formed and configured so that it can be actuated by a finger, especially by only one finger.

6. A vehicle according to any one of claims 1 to 5, **characterised in that** the selection device (6) can be actuated using an actuating force of less than 10N.

7. A vehicle according to any one of claims 1 to 6, **characterised in that** a sensor system is provided which detects the rotated or swivelled state, especially the rotational or swivel angle of the selection element (7) relative to its non-actuated position, and delivers a corresponding signal to a transmission control device.

8. A vehicle according to claim 7, **characterised in that** an optical sensor is provided which detects the rotated or swivelled state.

9. A vehicle according to any one of claims 1 to 8, **characterised in that** a transmission control device is provided to control the transmission, the selection device (6) being electrically connected to the transmission control device.

## Revendications

1. Véhicule comprenant :
- un volant de direction (1) mobile en rotation autour d'un axe de direction (2),
- une boîte de vitesse,
- un dispositif sélecteur (6) pouvant être actionné manuellement prévu pour permettre de sélectionner différents états de fonctionnement de la boîte de vitesse,
• qui est monté à distance du volant de direction (1), du côté de ce volant (1) situé à l'opposé du conducteur,
• qui comprend un élément de sélection (7) mobile en rotation ou en pivotement autour d'un axe de rotation ou de pivotement (8) qui est essentiellement transversal à l'axe de direction (2), et
• qui est prévu pour permettre la sélection d'états de fonctionnement en marche avant (D), au point mort (N) et en marche arrière (R) de la boîte de vitesse,
selon lequel
• l'élément de sélection (7) comprend un segment épaissi (7a) et un segment de manoeuvre (7c) s'écartant radialement de celui-ci par rapport à l'axe de rotation ou de pivotement (8) et comportant des surfaces de manoeuvre (7b),
• il est prévu un dispositif de rappel qui après une manoeuvre ramène constamment le dispositif sélecteur (6) dans une position de repos prédéfinie,
• à partir de la position de repos le dispositif sélecteur peut être déplacé dans une première position de manoeuvre contre une force de rappel, et
• à partir de la première position de manoeuvre le dispositif sélecteur (6) peut encore être déplacé dans une seconde position de manoeuvre contre une force de rappel,
• l'élément de sélection (7) est monté mobile en rotation ou mobile en pivotement sur un porte-élément de sélection (9) qui s'écarte vers l'extérieur essentiellement radialement de l'habillage (5) de la colonne de direction entourant l'axe de direction (2), et
• l'élément de sélection (7) est monté du côté droit de l'axe de direction (2) dans le sens de déplacement du véhicule,
**caractérisé en ce qu'**
• il est prévu un point de poussée qui doit être surmonté lors du passage de la première à la seconde position de manoeuvre, et
• le segment de manoeuvre (7b) doit être déplacé par rotation ou pivotement dans la direction de déplacement du véhicule, pour sélectionner l'état de fonctionnement, déplacement en marche avant (D) et à l'opposé de cette direction de déplacement pour sélectionner l'état de fonctionnement déplacement en marche arrière (R).

2. Véhicule conforme à la revendication 1,
**caractérisé en ce que**
l'élément de sélection (7) peut être déplacé par rotation ou par pivotement dans une première direction et dans une seconde direction opposée à la première direction.

3. Véhicule conforme à l'une des revendications 1 et 2,
**caractérisé en ce que**
l'élément de sélection (7) dépasse un peu de la couronne (3) du volant de direction (1) dans la direction radiale de ce volant de direction.

4. Véhicule conforme à l'une des revendications 1 à 3,
**caractérisé en ce qu'**
il est prévu sur le porte-élément de sélection (9) un dispositif indicateur (10) permettant d'indiquer l'état de fonctionnement (R, N, D) actuellement sélectionné.

5. Véhicule conforme à l'une des revendications 1 à 4,
**caractérisé en ce que**
le dispositif sélecteur (6) est conçu et réalisé pour pouvoir être manoeuvré avec les doigts, en particulier avec un seul doigt.

6. Véhicule conforme à l'une des revendications 1 à 5,
**caractérisé en ce que**
le dispositif sélecteur (6) peut être manoeuvré avec une force inférieure à 10N.

7. Véhicule conforme à l'une des revendications 1 à 6,
**caractérisé en ce qu'**
il est prévu un système de capteurs qui détecte l'état de rotation ou l'état de pivotement en particulier l'angle de rotation ou l'angle de pivotement de l'élément de sélection (7) par rapport à sa position de repos et transmet un signal correspondant à un appareil de commande de la boîte de vitesse.

8. Véhicule conforme à la revendication 7,
**caractérisé en ce qu'**
il est prévu un capteur optique au moyen duquel l'état de rotation ou l'état de pivotement est détecté.

9. Véhicule conforme à l'une des revendications 1 à 8,
**caractérisé en ce qu'**
il est prévu un appareil de commande de la boîte de vitesse pour permettre de commander la boîte de vitesse, le dispositif sélecteur (6) étant relié électriquement à cet appareil de commande de la boîte de vitesse.
